Europäisches Patentamt

European Patent Office

Office européen des brevets

(11) Veröffentlichungsnummer: **0 387 776**
**A2**

## (12) EUROPÄISCHE PATENTANMELDUNG

(21) Anmeldenummer: **90104704.3**

(22) Anmeldetag: **13.03.90**

(51) Int. Cl.5: **G01B 5/03, G01B 21/04**

(30) Priorität: **17.03.89 DE 3908760**

(43) Veröffentlichungstag der Anmeldung:
**19.09.90 Patentblatt 90/38**

(84) Benannte Vertragsstaaten:
**CH DE FR GB IT LI SE**

(71) Anmelder: **DIEHL GMBH & CO.**
**Stephanstrasse 49**
**D-8500 Nürnberg(DE)**

(72) Erfinder: **Welte, Elmar, Dipl.-Ing.**
**Schmausenbuckstrasse 44**
**D-8500 Nürnberg 30(DE)**
Erfinder: **Rackl, Richard, Dipl.-Ing.**
**Katzwanger Strasse 129**
**D-8500 Nürnberg 40(DE)**
Erfinder: **Zimmermann, Walter, Dipl.-Ing.**
**Ringstrasse 14**
**D-8571 Schnabelwaid(DE)**

(54) **Messeinrichtung.**

(57) Es wird eine Meßeinrichtung (1) mit einem Ständer (2) vorgeschlagen, an dem ein Meßtaster (12)
mittels eines elektromotorisch angetriebenen Schlittens (11) höhenverschiebar angeordnet ist. Zusätzlich zu dieser Höhenverschiebung ist der Meßtaster
(12) zusammen mit dem Ständer (2) an Führungen
(19, 27) in den X- und Y-Koordinaten innerhalb eines
Wegerfassungssystems bewegbar. Ferner ist der
Ständer (2) um eine vertikale Achse (23) drehbar,
die durch den Antastkopf (13) des Meßtasters (12)
geht.

Fig. 2

Xerox Copy Centre

EP 0 387 776 A2

## Meßeinrichtung

Die Erfindung betrifft eine Meßeinrichtung mit einem Ständer, an dem ein einen Meßtaster tragender und elektromotorisch angetriebener Schlitten höhenverschiebbar angeordnet ist.

Aus der DE 31 09 856 C2 ist eine solche Meßeinrichtung als Höhenmeßgerät bekannt. Bei diesem bekannten Höhenmeßgerät übt der Meßtaster in Meßposition auf eine Meßstelle eine Meßkraft aus. Der Meßtaster ist am Schlitten starr angebracht. Die konstante Meßkraft wird durch eine dem Elektromotor nachgeschaltete Magnetfeldkupplung erzeugt. Durch diese Meßeinrichtung ist ein bestimmter Meßbereich nur in der Z-Koordinatenrichtung abfahrbar. Die Verschiebung des Höhenmeßgerätes auf dem Meßtisch ist einstellbar und erfolgt in der Praxis auf Luftkissen, welches durch eine integrierte, batteriebetriebene Pumpe erzeugt wird. Das bekannte Höhenmeßgerät ist mit einem Tischrechner drahtlos über Infrarotlicht verbunden.

Ausgehend von dem vorgenannten Stand der Technik ist es Aufgabe der Erfindung, eine Meßeinrichtung der eingangs genannten Art zu schaffen, welche unter Beibehaltung der leichten Handhabung weitere Anwendungsmöglichkeiten bietet.

Diese Aufgabe wird erfindungsgemäß durch die Merkmale des Patentanspruchs 1 gelöst. Erfinderische Ausgestaltungen finden sich in den Unteransprüchen 2 bis 6.

Ausgehend von dem bekannten Höhenmeßgerät wird mit den erfinderischen Merkmalen eine vielfältigere Anwendung und dadurch eine Erweiterung der Meßmöglichkeiten auf zusätzliche Koordinantenwerte erreicht. Diese neue Meßeinrichtung mit einer hinreichenden Genauigkeit im Werkstattbereich besitzt ein flexibeles und eventuell erweiterbares Meßvolumen. Die neue Meßeinrichtung erlaubt das Messen von Raumkoordinaten in einem relativ großen Meßvolumen, wobei der Meßtisch als Arbeitsplatte dient und insbesondere eine bedienungssichere Handhabung durch eine manuelle Antastung der X- und Y-Koordinaten zusätzlich zu der motorisch abfahrbaren Z-Koordinate erlaubt. Dadurch ist eine manuelle bzw. halbautomatische, allseitige Antastung eines Werkstückes mit einfachen Mitteln erreicht worden.

Der Meßtaster kann sowohl ein starr eingebauter als auch ein schaltender oder ein messender Meßtaster sein.

Die X- und Y-Koordinaten des Meßtasters werden im Prinzip mit Hilfe einer einfachen Verlängerung des Höhenmeßgerätes auf ein Meßsystem, welches auf Präzisionsführungen achsparallel bewegt werden kann, übertragen. Dabei bleibt die Meßeinrichtung um eine vertikale Achse drehbar, die durch den Tastpunkt des Meßtasters verläuft.

Gegenüber dem Stand der Technik werden mit dieser neuen Meßeinrichtung die Vorteile erzielt, daß auf der Basis eines Höhenmeßgerätes auch die Koordinaten eines Meßpunktes bestimmt werden können. Ferner wird durch die manuelle Antastung der sonst bei 3-D-Meßmaschinen notwendige hohe Schulungsaufwand vermieden, weil das Basiswissen eines Facharbeiters bei dieser Meßeinrichtung auch für 3-D-Messungen ausreicht. Schließlich bietet der Aufbau der Meßeinrichtung ein variables Meßvolumen. Der Freiheitsgrad der Antastung ist nicht eingeschränkt.

In der Zeichnung ist ein Beispiel der Erfindung dargestellt. Es zeigen:

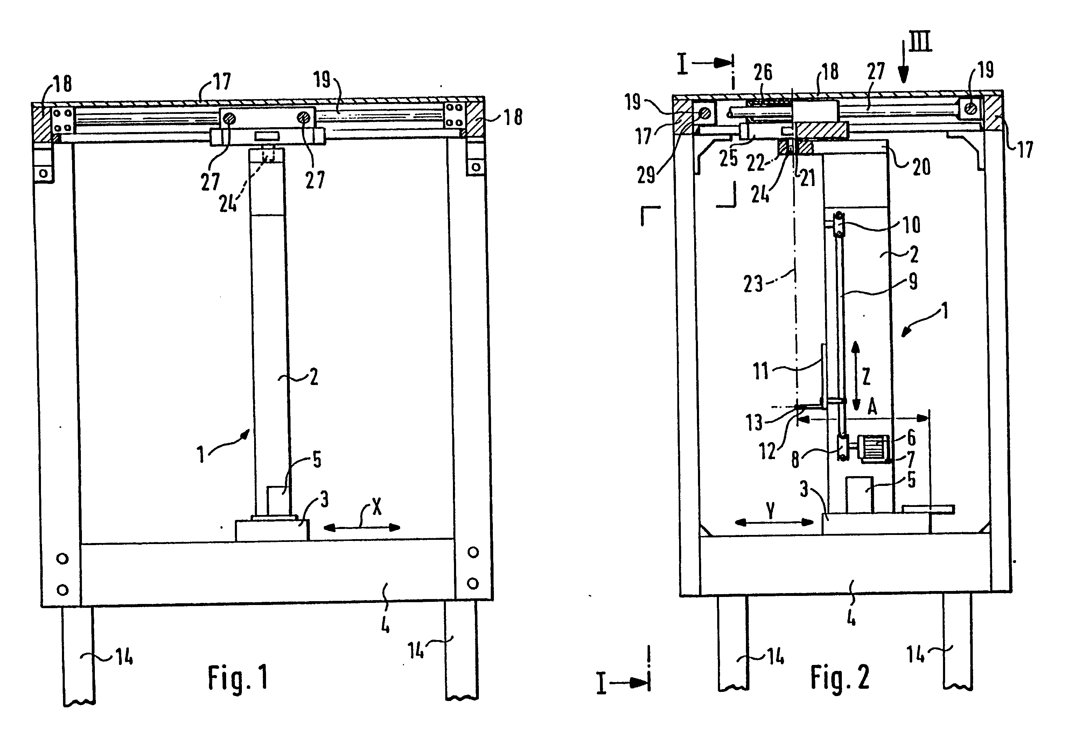

Figur 1 eine Meßeinrichtung, teilweise im Schnitt entsprechend der Linie I-I in Figur 2

Figur 2 eine Seitenansicht der Meßeinrichtung, teilweise im Schnitt

Figur 3 eine Draufsicht auf die Meßeinrichtung gemäß dem Pfeil III in Figur 2.

Die Meßeinrichtung 1 besteht aus einem Ständer 2, weicher mit seinem Fuß 3 auf einem Meßtisch 4 bewegbar ist. Für eine leichte Verschiebung des Ständers 2 sorgt ein einstellbares Luftkissen zwischen der Unterseite des Fusses 3 und dem Meßtisch 4, welches durch eine integrierte und batteriebetriebene Pumpe erzeugt wird.

Durch einen im Ständer 2 vorgesehenen Elektromotor 6 auf einer Halteplatte 7 wird ein Antriebsrad 8 angetrieben, welches ein Band oder ein Kabel 9 über eine obere Umlenkrolle 10 bewegt. Das Band 9 ist mit einem Schlitten 11 fest verbunden, der den wahlweise starren, schaltenden oder messenden Meßtaster 12 mit dem Antastkopf 13 aufnimmt.

Der Meßtisch 4 ruht auf Füssen 14. An den Außenseiten oder an den Füssen des Meßtisches 4 sind Stützstäbe 15 befestigt, die in ihren Bereichen oberhalb des Kopfes des Ständers 2 einen umlaufenden Rahmen 16 aus waagerecht angeordneten Längsstreben 17 und Querstreben 18 aufweisen. Parallel zu den Längsstreben 17 und im Abstand zu diesen sind in der X-Koordinate Führungen 19 aus einem Rundprofil angeordnet. Anstelle des Rundprofils sind selbstverständlich beliebige andere Querschnitte, wie beispielsweise vieleckige Querschnitte möglich.

Im Kopfbereich des Ständers 2 der Meßeinrichtung 1 ist eine Mitnahmevorrichtung 20 befestigt, die in Richtung des Meßtasters 12 mit einem Arm oder Ausleger über den Ständer 2 hinausragt und eine Bohrung 21 aufweist, deren Längsachse 22 in der vertikalen Achse 23 verläuft, die durch den Antastkopf 13 des Meßtasters 12 geht. In die Bohrung 21 der Mitnahmevorrichtung 20 ragt ein Bolzen 24 eines Führungskopfes 25 ein. Dadurch ist der Ständer 2 um die Achse 22 der Zapfen-Bohrung-Verbindung frei drehbar, ohne daß durch diese Drehung eine Verschiebung von Koordinaten im Antastkopf 13 erfolgt.

Der Führungskopf 25 besitzt 2 parallel zueinander beabstandete Führungsbohrungen 26 für die Aufnahme von Führungen 27 in der ersten Koordinatenrichtung. Diese Führungen weisen an ihren Stirnenden jeweils ein Führungsgehäuse 28 auf, welches mit Gehäusebohrungen 29 für die Aufnahme der Führungen 19 in der zweiten Koordinatenrichtung vorgesehen sind.

Diese beschriebene Konstruktion erlaubt eine Bewegung des Ständers 2 der Meßeinrichtung 1 in der ersten Koordinatenrichtung über die Führungen 27 und eine Bewegung in der zweiten Koordinatenrichtung über die Führungen 19. Beide Koordinatenrichtungen und damit auch beide Führungen 19 und 27 sind rechtwinklig zueinander angeordnet. Zusätzlich zu diesen Bewegungen in den X- und Y-Koordinatenrichtungen ist eine Drehung des Ständers 2 um die vertikale Achse 23 möglich.

In den Führungsgehäusen 28 befinden sich Leseköpfe 30, die mit inkrementalen Maßstäben 31 in Wirkverbindung stehen. Ein weiterer Maßstab 32 ist parallel zu den Führungen 27 angeordnet und wird von einem Lesekopf 33 im Führungskopf 25 beaufschlagt. Über die Leseköpfe 30 und 33 und in Verbindung mit den inkrementalen Maßstäben 31 und 32 sind die Verfahrwege des Ständers 2 der Meßeinrichtung in den Koordinatenrichtungen X und Y meßbar.

Anstelle der inkrementalen Meßsysteme können am Führungskopf 25 ebenso auch Laserinterferometer 34 an den vier Seiten vorgesehen sein. Diese Laserinterferometer 34 stehen mit Spiegelflächen 35 in Verbindung, die in der Y-Koordinate dann für die dort befestigten Maßstäbe 31 eingesetzt werden.

Selbstverständlich ist es möglich, daß sowohl in der X- als auch in der Y-Koordinate jeweils nur ein inkrementaler Maßstab bzw. nur ein Spiegel für den Einsatz des Laserinterferometers vorgesehen ist.

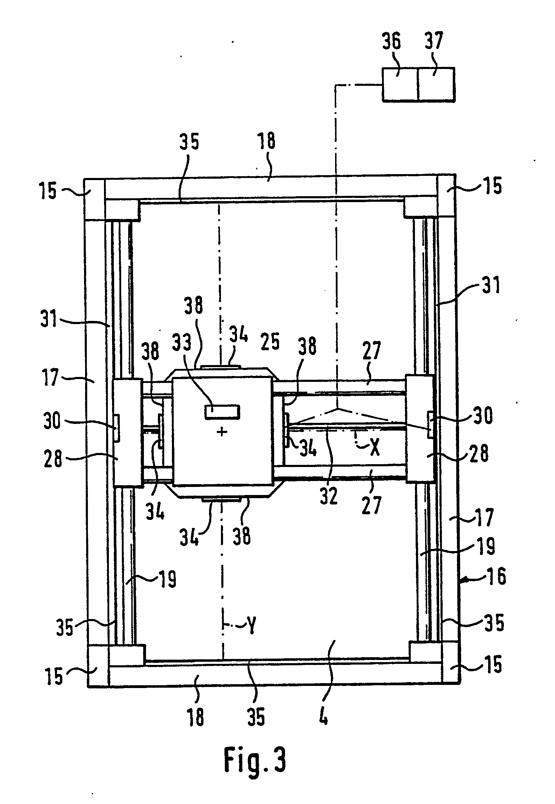

Die Laserinterferometer 34 bzw. die Leseköpfe 30 und 33 sind mit einer Meßwertauswerteeinheit 36 und einer Anzeigeeinheit 37 verbunden. Diese Konfiguration ist in Figur 3 stark schematisiert dargestellt.

## Ansprüche

1. Meßeinrichtung mit einem Ständer, an dem ein einen Meßtaster tragender und elektromotorisch angetriebener Schlitten höhenverschiebbar angeordnet ist,
dadurch gekennzeichnet,
daß der Ständer (2) an Führungen (19, 27) in die X- und Y-Koordinatenrichtungen innerhalb eines Wegerfassungssystems bewegbar und um eine vertikale Achse (23), die durch den Antastkopf (13) des Meßtasters (12) geht, drehbar ist.

2. Meßeinrichtung nach Anspruch 1,
dadurch gekennzeichnet,
daß die Führungen (19, 27) oberhalb des Meßtisches (4) etwa im Kopfbereich des Ständers (2) vorgesehen sind.

3. Meßeinrichtung nach den Ansprüchen 1 und 2,
dadurch gekennzeichnet,
daß auf der oberen Stirnseite des Ständers (2) eine Mitnahmevorrichtung (20) vorgesehen ist, die über eine Zapfen-Bohrung-Verbindung (21, 24) mit einem Führungskopf (25) verbunden ist, wobei die Längsachse (22) des Zapfens (24) und der Bohrung (21) durch die vertikale Drehachse (23) durch den Antastkopf (13) des Meßtasters (12) verläuft, und daß im Führungskopf (25) zwei parallel beabstandete Führungsbohrungen (26) für die Aufnahme der Führungen (27) eingerichtet sind, die endseitig mit Führungsgehäusen (28) verbunden sind, deren rechtwinklig zu den Führungsbohrungen (26) angeordnete Gehäusebohrungen (27) die Führungen (19) in der zweiten Koordinatenrichtung aufnehmen.

4. Meßeinrichtung nach den Ansprüchen 1 bis 3,
dadurch gekennzeichnet,
daß die Führungen (19) der zweiten Koordinatenrichtung an einen Rahmen (16) angeschlossen sind, der sich über Stützstäbe (15) an oder auf dem Meßtisch (4) oder seinen Füßen (14) abstützt.

5. Meßeinrichtung nach den Ansprüchen 1 bis 4,
dadurch gekennzeichnet,
daß parallel zu den Führungen (19, 27) inkrementale Meßstäbe (31, 32) vorgesehen sind, die mit Leseköpfen (30, 33) in den Führungsgehäusen (28) und im Führungskopf (25) in Wirkverbindung stehen, welche die ermittelten Meßwerte in den X- und Y-Koordinatenrichtungen an eine Meßwertauswerteeinheit (36) und an eine Anzeigeeinheit (37) weitergeben.

6. Meßeinrichtung nach den Ansprüchen 1 bis 4,
dadurch gekennzeichnet,
daß an mindestens zwei rechtwinklig zueinander angeordneten Außenflächen (38) des Führungskopfes (25) Laserinterferometer (34) eingerichtet sind, deren Lichtstrahlen von Spiegelflächen (35) reflektiert werden, die sich am Rahmen (16) in den X- und Y-Koordinatenrichtungen befinden, wobei die ermittelten Meßwerte an eine Meßwertauswerteeinheit (36) und an eine Anzeigeeinheit (37) weitergegeben werden.

Fig. 1

Fig. 2

EP 0 387 776 A2

Fig. 3